Europäisches Patentamt

European Patent Office

Office européen des brevets

(19)

(11) Publication number: **0 136 178**
A2

## (12) EUROPEAN PATENT APPLICATION

(21) Application number: **84306590.5**

(22) Date of filing: **27.09.84**

(51) Int. Cl.⁴: **G 06 F 12/06**

(30) Priority: **29.09.83 US 537040**

(43) Date of publication of application: **03.04.85**
Bulletin 85/14

(84) Designated Contracting States: **AT BE CH DE FR GB IT LI LU NL SE**

(71) Applicant: **TANDEM COMPUTERS INCORPORATED, 19333 Vallco Parkway, Cupertino California 95014 (US)**

(72) Inventor: **Horst, Robert Whiting, 1538 Primrose Way, Cupertino California 95014 (US)**
Inventor: **Collins, Richard Matthew, 79 Smitwood Street, Milpitas California 95035 (US)**
Inventor: **Lauer, Gilbert Eugène, 930 West Remington No. 6a, Sunnyvale California 94087 (US)**

(74) Representative: **Ayers, Martyn Lewis Stanley et al, J.A. KEMP & CO. 14 South Square Gray's Inn, London, WC1R 5EU (GB)**

(54) **Automatic memory board reconfiguration.**

(57) A method for automatically reconfiguring the memory address space of a plurality of memory boards allows varying capacity boards to be arbitrarily assigned to backplane locations without human intervention. By reading from a nonvolatile memory on each memory board, a processor can determine the proper address range to assign each memory board. It can then load this information into the borad's configuration register and, if necessary, update the board's nonvolatile memory. Each memory board then uses the addresses of incoming access requests and the contents of its configuration register to determine which memory components are to be accessed.

ACTORUM AG

AUTOMATIC MEMORY BOARD RECONFIGURATION 0136178

## FIELD OF THE INVENTION

The present invention relates to automatic configuration of computer memory on startup. More specifically, it relates to the use of stored configuration data from each memory board to automatically assign memory boards to contiguous sectors of memory, without human operator intervention.

## BACKGROUND

Computer memory is generally structured as a linear array of words; each word is assigned a single address and contains a fixed amount (e.g., 32 bits) of data. Memory chips store the data and respond to each address with that word's data. Several memory chips are collected on a single circuit board, and several circuit boards are used to make up the address space of the computer.

Each circuit board is assigned to a sector of memory and makes up only part of the computer's entire memory address space. It must be configured to respond to addresses in that sector of memory, and to no other addresses. The circuit board is designed to access the proper group of its memory chips when responding to a memory request.

Circuit boards and the memory chips they contain are fallible pieces of electronic equipment; they must therefore be tested for failures. Generally this is done when the memory is first configured. Boards with errors must not be included in the memory address space, since this might result in erroneous data reads or data writes.

## THE PRIOR ART

Each memory circuit board is typically connected to the computer's memory address bus. The memory address bus is used to transmit the processor's memory access requests to the memory. Each board examines the asserted memory address and determines if it is being accessed; it responds if it is. This is normally done by comparing the high-order bits of the asserted address with the memory board's allocated position in memory address space.

One method which is often employed in the prior art to configure the memory address space is to set manual switches or to connect jumpers on the circuit board to indicate its position in memory address space. The high-order bits of the asserted address are directly compared with these switch values, and the memory responds when they are equal.

Another method which has been employed in the prior art is to use adders to keep a running count of the cumulative amount of memory in the system. Each memory board can use the total amount of space below it to define its address range. See "A High Performance Memory System with Growth Capability," 33:3 HP Journal 15 (March 1982). However, this arrangement requires boards to be assigned to contiguous slots in the backplane according to decreasing size. In addition, there is no way to configure around defective boards.

While these methods of the prior art accomplish their objective, to allow the use of multiple memory circuit boards in a computer system, they have some drawbacks. Normally, memory boards must be placed in the computer backplace in order of their memory capacity, denser memory boards assigned to lower address slots. Memory configuration must be performed at least in part by hand; it cannot be performed automatically or as part of a dynamic recovery from a machine error. There exists a need to solve these problems and to use an improved memory configuration procedure.

Therefore, it is an object of the present invention to improve flexibility in configuring memory for computer systems, by reducing the work needed to alter the memory of the system, by removing the requirement for sorted placement of memory boards, and by removing the requirement for human operator intervention.

It is a second object of the present invention to reduce the number and frequency of errors in memory configuration, by reducing the work needed to alter the memory of the system, and by removing the requirement for human operator intervention.

It is yet a third object of the present invention to improve the ease and speed of memory configuration, by reducing the work needed to alter the memory of the system, by removing the requirement for sorted placement of memory boards, and by removing the requirement for human operator intervention.

These and other objects of the present invention will be more clearly understood from an examination of the specification, the drawings, and the accompanying claims.

## BRIEF DESCRIPTION OF THE INVENTION

Each memory circuit board for use with the present invention contains a nonvolatile memory and a configuration register. These are used to record the board's size, default address space, and its actually assigned address space. A microprocessor reads the size and default address space from each board and tests the information for errors. It then uses a general process to assign memory boards to address spaces which assures that a continuous unbroken, and non-overlapping array of memory addresses is available to the

pr cessor. Next, it stores each board's address space assignment in th board's configuration register. This information is later used by th memory boards during operation of the system to respond to memory ac esses requested by the processor.

## BRIEF DESCRIPTION OF THE DIAGRAMS

Figure 1 is a block diagram of the system hardware for the invention.

Figure 2a is a flow chart of the memory configuration process.

Figure 2b is a flow chart of the feasible configuration creation process.

Figure 3 is a block diagram of the secondary access path to the configuration register and the nonvolatile memory on the memory board in a preferred embodiment of the invention.

Figure 4 is a block diagram of the memory board address selection hardware in a preferred embodiment of the present invention.

## DETAILED DESCRIPTION OF THE INVENTION

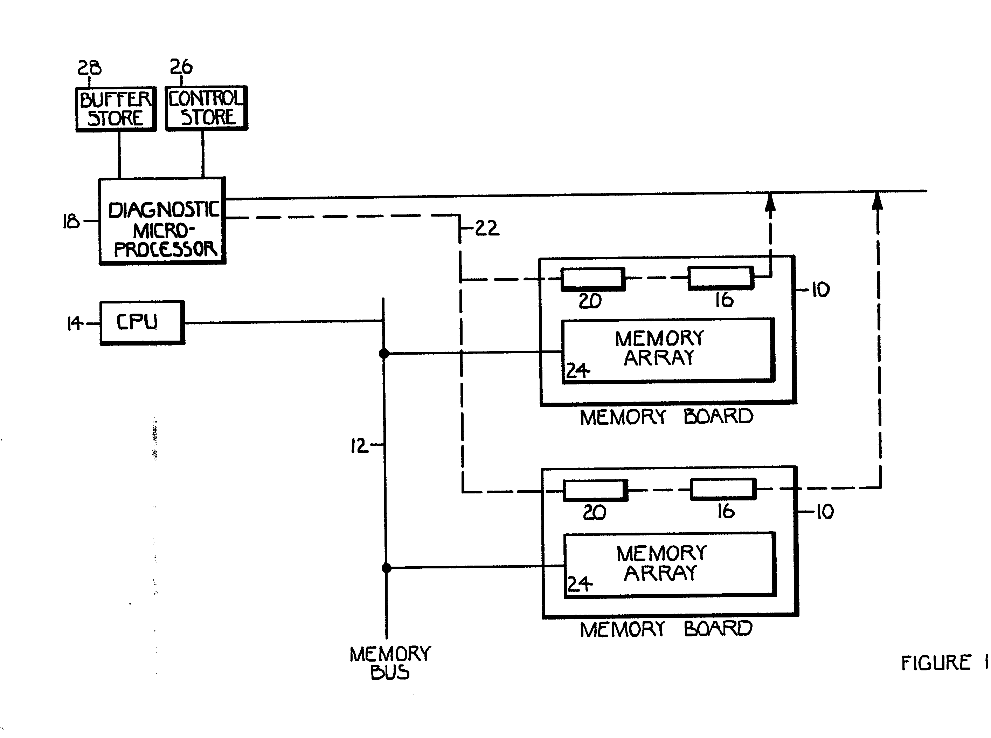

Referring now to Figure 1, the system hardware for the invention is described.

One or more memory boards 10 are connected to the computer's memory address bus 12. This allows memory access to those boards by the CPU 14. The boards are physically placed in a connector backplane (not illustrated). In contrast with the requirement of contiguous, sorted board placement which is found in the prior art, physical order does not matter, and so the boards may be placed arbitrarily.

Included on each board is a nonvolatile memory 16, which records the memory size and its default address range. In a preferred embodiment of the present invention, nonvolatile memory 16 is a nonvolatile RAM (NOVRAM). However, given this disclosure, those skilled in the art will recognize that other forms of nonvolatile memory, such as electrically erasable read only memory would be used, or that CMOS RAMs or registers with battery backup could be employed.

In a preferred embodiment, the contents of nonvolatile memory 16 are read by a diagnostic microprocessor 18 so it may assign boards to their actual address ranges according to the memory configuration process although the main processor or any processor in the system could be used to perform this task. The Z-80 microprocessor, from Zilog, Inc., is suitable for this purpose.

A code which defines the actual address range assigned to each memory board 10 is written into a configuration register 20 located on the board after it has been determined. Configuration register 20 may be one of numerous data processing registers known in the art, although in the preferred embodiment it is a serial and parallel access register. The configuration code is kept in a location in nonvolatile memory 16 and will also be written into the nonvolatile memory 16 if an update is required.

In a preferred embodiment, configuration register 20 is five bits wide. The five bits of the configuration register 20 include three bits of address range (the three high-order bits of the base address for this memory board's address slot) and two bits which indicate the memory board size. In the present embodiment, each memory board may be physically one or two million bytes of memory. Each bit of the size value, when set, indicates that one of the two halves of the memory board is present.

In the preferred embodiment, the microprocessor 18 does not use the memory bus 12 to read and write the configuration register 20

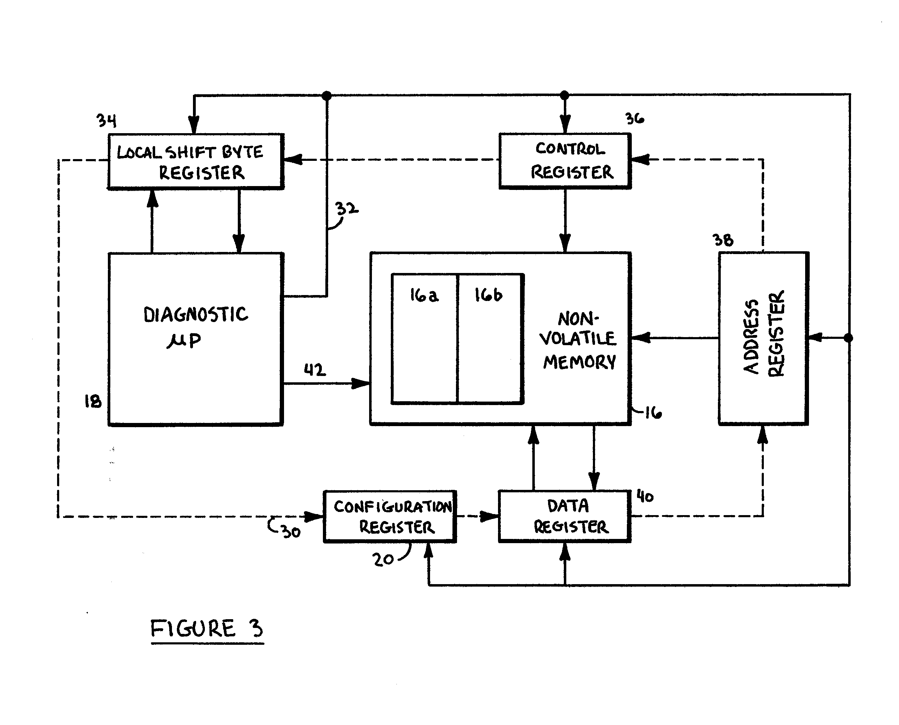

nonvolatile memory 16. Instead it uses a secondary access path employing "edge triggered scan design." Scan design is well known the art; it involves connecting registers together in a large shift-register loop and using repeated bit shifting to read or to write the contents of any register. This access path is more fully explained below with reference to figure 3. Those skilled in the art will realize that access to configuration register 20 and nonvolatile memory 16 could easily be accomplished across the normal parallel memory bus 12 or by other forms of secondary access, such as a parallel maintenance bus. A signal or code appearing on one or more address or control lines could condition these elements (configuration register 20 and nonvolatile memory 16) to read or write data.

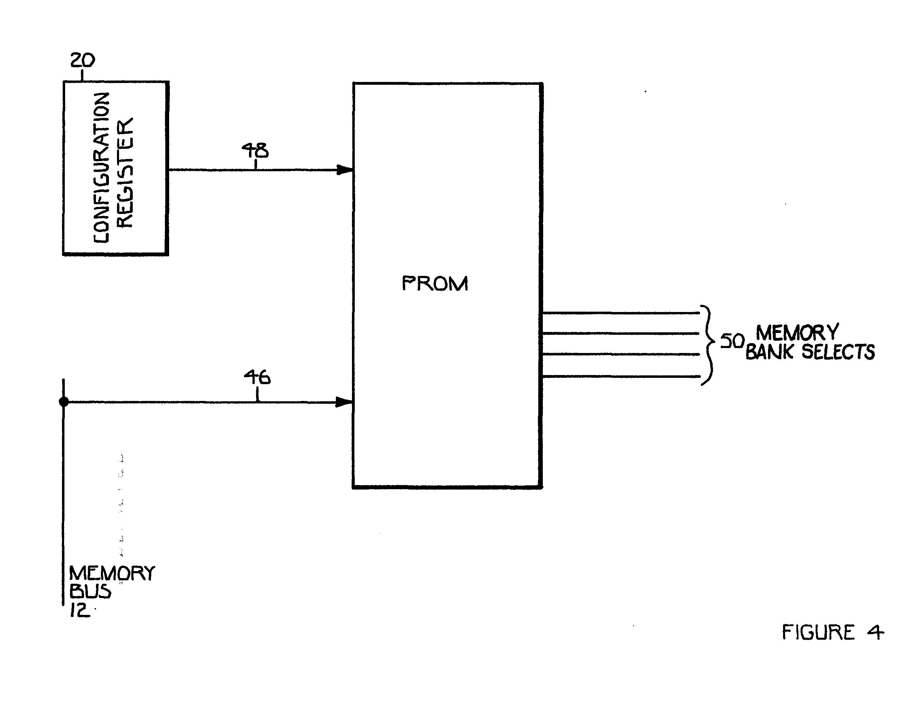

When the memory address space is configured, each memory board 10 will know its assigned address space by the contents of its configuration register 20. Each memory access is performed by having the CPU 14 assert a memory address onto the memory address bus 12. Each memory board 10 examines this address and compares it with its assigned address space, as is more fully explained with reference to figure 4. If the asserted address is within the address range of the memory board, an access occurs to the memory array shown diagramatically at 24.

The configuration process is invoked during the power-on sequence when the system is started, but those skilled in the art will readily see that it can be invoked at most any time under software control, i.e., reconfiguration could be invoked after a memory access failure. The diagnostic microprocessor 18 executes the configuration process under the control of its local control store 26 and uses the local buffer store 28 in the preferred embodiment although it may use control store and buffer space used by another processor.

Referring now to figure 2a, the configuration process is described.

At step 52, the microprocessor 18 examines each memory slot for the presence of a memory board 10. It does this by testing the secondary access path to each memory slot. Memory slots which do not pass this test are presumed not to contain functioning memory boards. Only boards which are present and functioning are used to configure the memory address space.

This test is performed as follows: First, a pattern or all ones followed by one of all zeros is loaded and read back from each slots shift string. Those slots not returning the input data are failed immediately. For the remaining slots, a test pattern consisting of series of ones with the least significant bit set to a zero is created and loaded into the first slot's shift string. The zero is left shifted in the pattern and the next slot's string is loaded. This procedure is repeated until all of the slots' shift strings are loaded. The size of the test pattern in bits corresponds to the number of shift strings to be accessed. Once loaded, all the patterns are read back and verified. Any pattern mismatch is resolved to a failing slot using the following two simple rules: If the pattern returned by the slot's shift string contains a one in the bit position where a zero was stored, then the slot accessed is also responding to the selection of another slot. If the pattern returned by the slot's shift string contains a zero in the bit position where a one was stored, then another slot is also responding to the one being accessed. Any extra zeros found can be resolved to a failing slot by the direct correspondence between the bit position of the extra zero and the slot having selection problems.

If, for example, four slots are to be tested, the minimum size of the test pattern must be four bits. The unique test patterns are loaded into each slot's string so that the four strings contain the following patterns: 1110, 1101, 1011, 0111. The patterns are then read back and verified to contain the patterns above. The following are two error cases and how they are handled using the previously defined rules:

Suppose that slot 1 responds to selection of slot 3. The pattern returned when slot 1 is accessed would be 101$\underline{1}$. Since the underlined bit should be a zero but is a one, this indicates that slot 1 selection is defective.

Further, suppose that both slots 3 and 4 respond to selection of string 3. The pattern returned when slot 3 is accessed would be $\underline{00}$11. Since the bit corresponding to the slot accessed is zero as it should be, the additional zero in the first position indicates slot four has defective selection circuitry.

In the case of two slots responding to each other's selection, the test would flag the first bad string found. Once the first error was corrected, the second bad slot would be flagged.

Next, at step 54, microprocessor 18 reads the contents of each board's nonvolatile memory 16. It records the results in its local buffer memory 28. Each nonvolatile memory 16 may also be checked for erroneous data. The nonvolatile memory 16 on a given memory board 10 may contain, as part of it's information, a unique serial number for the board. To use this information to test selection, the serial number and it's complement along with a copy of the two values may be contained in the nonvolatile memory. When checking for selection, the serial number and its complement are read and the two values verified against each other. If a miscompare occurs, the copy of the serial number and its complement are read and verified. The same miscompare occurring in the copy indicates that there are two slots responding to the select. Any other miscompare or no miscompare in the copy indicates that there is a data error in the nonvolatile memory 16. Thus it is possible to use only boards which are error-free to configure the memory address space.

At step 56, the microprocessor 10 tests to see if the collection of default address ranges which it has read from the memory boards 10 forms a "feasible" configuration. A feasible configuration is one in which the address ranges assigned to the memory boards include the address zero, do not overlap, and collectively form a contiguous range of addresses.. If the configuration is feasible the microprocessor proceeds to step 58 to write out the configuration to the configuration registers; otherwise it executes steps 60, 62 and then 58 to create a new feasible configuration, and write out the configuration to the configuration registers.

At step 60, the microprocessor 18 creates a new feasible configuration. In a preferred embodiment, it does this by allocating the larger memory boards to lower positions in the memory address space; this assures that there are no breaks or overlaps in the array of addressable memory words, and reduces the probability of reconfiguration later on.

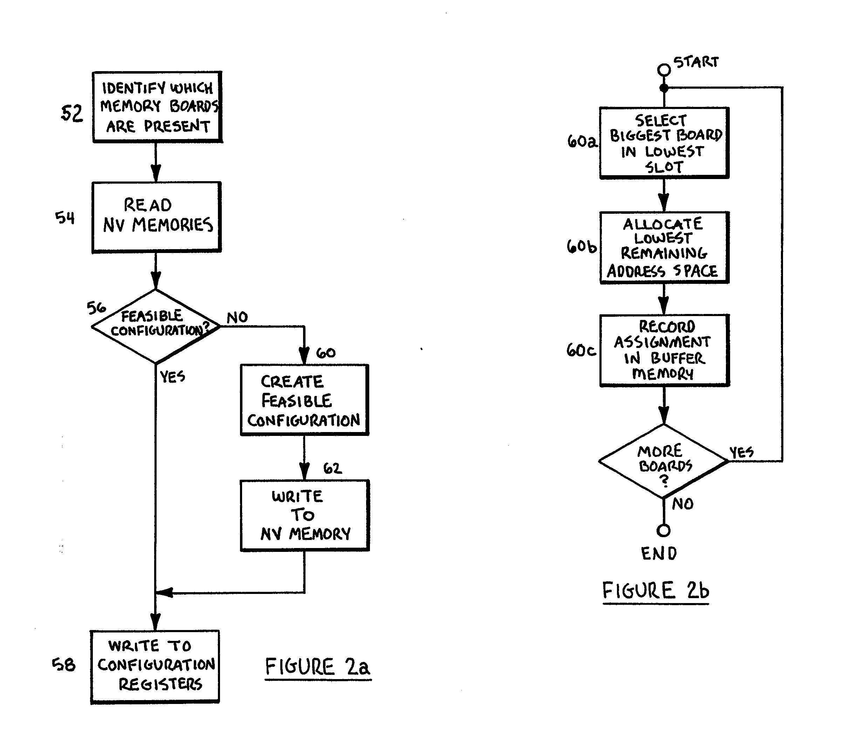

Referring now to figure 2b, the feasible configuration creation process is described in greater detail.

At step 60a, the diagnostic microprocessor 18 selects the largest size memory board 10 not yet assigned a memory space; if there are several of the same size, it preferably selects the one with the lowest memory slot number. The

selection is somewhat arbitrary and any selection falls within the scope of the present invention. At step 60b, it assigns an appropriately sized range of addresses that begins with the lowest unassigned memory address to the memory board. At step 60c, it records this assignment in its local buffer memory 28. If there are no more memory boards to assign, the new feasible configuration is fully created. Otherwise, the microprocessor returns to step 60a and continues until a new feasible configuration is in fact fully created.

At step 62, the microprocessor 18 rewrites the nonvolatile memory for each memory board to make its default address range equal to its actual address range. It uses the secondary access path 22 to perform the write in the preferred embodiment. Although in a preferred embodiment it writes to all memory boards from its buffer memory after completing the configuration assignments, microprocessor 18 could also write to each memory board as its assignment is made. The nonvolatile memory is only rewritten rarely, because some nonvolatile memories can only be written a small (about 1000) number of times before they fail.

At step 58, the microprocessor 18 writes the configuration register for each memory board with its actual address range, using the secondary access path 16 to perform the write. This concludes the memory configuration processes.

Referring now to figure 3, the preferred secondary (scan design) access path is described.

The configuration register 20 along with other registers on each memory board 10 are linked into a large serial shift-register assembly which allows them to be serially accessed. Serial shift path 30 is shown in dashed lines. The diagnostic microprocessor 18 asserts a control signal on line 32 to all these registers which places the registers in serial shift mode.

When it wishes to read a particular register, the microprocessor 18 shifts the data in the shift register assembly the requisite number of bits until the register's contents are present in its local shift byte register 34, it then reads the contents of the local register directly. To write values, it loads its local shift byte register 34 and shifts the data in the shift-register assembly the requisite number of bits until the data byte has reached the desired register.

The program running in microprocessor 18 has knowledge of the total length of all the registers on the memory board, so it shifts the proper number of bits in every case.

On each memory board 10, as a means of servicing nonvolatile memory 16, three registers are provided. Nonvolatile memory control register 36 supplies the commands to which the memory responds. Nonvolatile memory address register 38 supplies addresses to the memory and nonvolatile memory data register 40 is used to pass data in and out of nonvolatile memory 16.

Though the configuration register 20 is written and read using just this process, the nonvolatile memory may need to be read and written in a more complex manner. A NOVRAM, as used in the preferred embodiment, is divided in practice into two parts, a volatile portion 16a and an nonvolatile portion 16b. To affect the nonvolatile memory, the microprocessor scans values into the NV memory control register 36, the NV memory address register 38, and the NV memory data register 40. It then asserts a control signal to the nonvolatile memory via line 42 which instructs the memory to perform a data transfer.

The NOVRAM recognizes four control signals: READ, WRITE, STORE, and RECALL. READ and WRITE will alter the volatile portion 16a

166/135

0136178

directly. The STORE command will alter the nonvolatile portion 16b to be a copy of the volatile superstrate, while the RECALL command will copy the nonvolatile portion to the volatile portion. In practice, the WRITE and STORE commands are issued together to assure that data written to the nonvolatile memory is not lost.

These described properties of the nonvolatile memory are common to NOVRAMs in the industry and are well known in the art. They are also completely transparent to the user of the invention, as those skilled in the art can readily see. It will be understood that if other types of memory are employed for use as nonvolatile memory 16, the above-described control sequence will be altered accordingly.

Referring now to figure 4, the memory board comparator is described.

Each memory board 10 contains a PROM 44 which it uses to determine which memory addresses asserted on the memory address bus 12 by the CPU are for that board. The five high-order bits of the asserted memory address are placed on the PROM address lines 46. Five bits from the configuration register 18 are placed on the address lines 48. The PROM 44 responds with a 4-bit vector 50 which tells the memory board which, if any, memory "bank," or quarter-board, should be accessed. PROM 44 is programmed to recognize combinations of code and address that warrant a response. If the 4-bit vector is all zero, the memory board does not respond at all. Otherwise one of the four lines comprising vector 50 will contain a logic one which will enable one bank or quarter the memory array 24. Of course a comparator could be used to compare the two sets of five bits and enable the entire memory board.

Those skilled in the art will recognize that while a preferred embodiment has been disclosed, variations are possible without departing from the intended scope of the present invention.

We claim

1. Apparatus for automatically reconfiguring the memory address structure of a data processing system having a plurality of memory boards each with a plurality of memory devices, including:

nonvolatile memory means on each memory board for storing information about the address size of that memory board;

processor means for reading the contents of said nonvolatile memory means, collecting said contents in temporary storage means, creating an address space assignment for each memory board, and writing said address space assignment to each memory board;

register means on each memory board for storing said address space assignment;

comparison means on each memory board for comparing addresses asserted on the memory bus of said data processing system with said address space assignment;

enabling means on each memory board responsive to said comparison means for enabling access to selected ones of said memory devices on that board.

FIGURE 1

1/4

0136178

FIGURE 2b

START

60a — SELECT BIGGEST BOARD IN LOWEST SLOT

60b — ALLOCATE LOWEST REMAINING ADDRESS SPACE

60c — RECORD ASSIGNMENT IN BUFFER MEMORY

MORE BOARDS ? — YES / NO

END

FIGURE 2a

52 — IDENTIFY WHICH MEMORY BOARDS ARE PRESENT

54 — READ NV MEMORIES

56 — FEASIBLE CONFIGURATION? — YES / NO

60 — CREATE FEASIBLE CONFIGURATION

62 — WRITE TO NV MEMORY

58 — WRITE TO CONFIGURATION REGISTERS

NON-VOLATILE MEMORY

16a 16b

CONTROL REGISTER 36

ADDRESS REGISTER 38

DATA REGISTER 40

CONFIGURATION REGISTER 20

LOCAL SHIFT BYTE REGISTER 34

DIAGNOSTIC µP 18

32

42

30

16

FIGURE 3

FIGURE 4